# EUROPÄISCHE PATENTANMELDUNG

(11) **EP 4 745 092 A1**
(43) Veröffentlichungstag der Anmeldung: **20.05.2026**
(21) Anmeldenummer: 24213768.5
(22) Anmeldetag: 19.11.2024
(51) Int. Cl.: C02F 1/461, C02F 1/66, C02F 101/10, C02F 101/12, C02F 101/16, C02F 101/18, C02F 101/34, C02F 101/38

(54) **VERFAHREN ZUR ELEKTROCHEMISCHEN BEHANDLUNG CHEMISCHER PROZESSABWÄSSER**

(71) Anmelder: Evonik Operations GmbH, 45128 Essen (DE)
(72) Erfinder: Metternich , Jan Benedikt, 45657 Recklinghausen (DE); Lennartz, Laura, 55131 Mainz (DE); Stadtmüller, Tobias, 63500 Seligenstadt (DE); Arndt, Sebastian, 65462 Ginsheim Gustavsburg (DE); Majewski, Alexander, 45721 Haltern am See (DE); Stenner, Patrik, 63452 Hanau (DE); Kohlstruk, Stephan, 45966 Gladbeck (DE)
(74) Vertreter: Evonik Patent Association

(57) **Zusammenfassung**

Gegenstand der vorliegenden Erfindung ist ein Verfahren zur Behandlung von chemischem Prozessabwasser in einer mindestens eine BDD-Anode und mindestens eine Platin-, Graphit-, Edelstahl-, DSA-, Titan- oder BDD-Kathode aufweisenden elektrochemischen Zelle, bei der die elektrochemische Zelle eine quasi-geteilte Zelle ist.

## Beschreibung

Die Entfernung organischer Substanzen aus Abwässern chemischer Prozesse ist eine große Herausforderung für die chemische Industrie. Insbesondere oxidationsstabile Materialien weisen oft eine geringe biologische Abbaubarkeit auf und können somit selbst durch die Kombination verschiedener Behandlungsmethoden nur eingeschränkt auf biologischem Wege aus Abwässern eliminiert werden. Die derzeit im Stand der Technik offenbarten Methoden zur Behandlung von Abwässern kombinieren deswegen physikalische, chemische und biologische Verfahren (Crini et al., Environmental Chemistry Letters (2019) 17:145-155).

Physikalische Methoden werden üblicherweise zur Vorbehandlung der Abwässer eingesetzt und basieren typischerweise auf Adsorption oder Absorption der unerwünschten Bestandteile. Besonders adsorptive Prozesse, beispielsweise auf Basis von Aktivkohle, benötigen regelmäßigen Austausch sowie Regeneration des Adsorbens und führen langfristig zur Erzeugung großer Mengen organisch-belasteter Feststoffabfälle (siehe US 9,499,414 B1).

Chemische Verfahren stellen oftmals den primären Abwasserbehandlungsschritt dar und umfassen vor allem chemische Fällungen, Koagulation/Flotation und chemische Oxidation. Die physiko-chemischen Methoden Fällung, Flockung und Koagulation erfolgen unter dem Einsatz von Fällungsmitteln, Flockungsmitteln oder Koagulantien, welche nach der Abwasserbehandlung separat entsorgt werden müssen (WO 90/05706 A1, DE 36 36 993 C1, US 6,447,686 B1).

Die chemische Oxidation erfolgt unter Nutzung stöchiometrischer Oxidationsmittel, wie z.B. Wasserstoffperoxid (CN 101698530 A), Permanganat (CN 103663666 A) und Ozon (CN 203498223 U). Ergänzend können Mediatoren, wie z.B. Metallsalze, eingesetzt werden (CN 101698530 A).

Physikalische und chemische Abwasserbehandlungsmethoden sind mit hohem Materialaufwand assoziiert und resultieren in der Bildung weiterer Abfälle. Besonders chemische Oxidationsprozesse erzeugen typischerweise eine hohe Menge chemisch belasteter Abfälle und Salzfrachten. Zudem benötigen klassische Methoden, wie z.B. der Fenton-Prozess, die Einstellung genauer Reaktionsbedingungen, z.B. die Einstellung von pH-Werten, was die Nutzung weiterer chemischer Reagenzien voraussetzt.

Aus diesem Grund ist die elektrochemische Oxidation von organischen Abwässern von Interesse.

CN 112028186 A offenbart ein Verfahren zur gleichzeitigen Entfernung von Kohlenstoff- und Stickstoffhaltigen Verunreinigungen aus Abwässern, bei dem eine geteilte Zelle eingesetzt wird. Geteilte Zellen weisen Separatoren zur Trennung der einzelnen Halbzellen auf. Der Einsatz von Separatoren, z.B. von Membranen, führt jedoch zu einem Mehraufwand bei der Abwasserbehandlung. Weiterhin weisen viele Separatoren eine geringe Stabilität gegenüber organischen Medien auf. Besonders bei hohen (pH ≥ 10) oder niedrigen (pH ≤ 3) pH-Werten müssen die Membranen regelmäßig ausgetauscht werden, was den Aufwand für die Abwasserbehandlung signifikant steigert.

CN 209537052 U offenbart eine rotierende Elektrolysezelle, die zur Abwasserreinigung eingesetzt werden kann. Ihr Aufbau ist jedoch für eine großtechnische Eignung zu komplex.

CN 101891285 A offenbart die elektrochemische Behandlung von Phenol-haltigen Abwässern unter Verwendung einer ungeteilten Zelle und zweier gleich großer Elektroden, bei denen es sich um eine BDD-Anode und eine Stahl-Kathode handelt. CN 101863535 B offenbart die Behandlung pharmazeutischer Abwässer durch elektrochemische Oxidation in einer ungeteilten Zelle mit einer BDD-Anode und einer Stahlkathode gleicher Größe. CN 108726642 A offenbart die Aufreinigung organisch belasteter Abwässer in einer ungeteilten Zelle mit einer BDD-Anode und einer Titan-Kathode gleicher Größe. CN 103058331 A beschreibt die elektrochemische Behandlung von mit Pyridinalkohol belastetem Abwasser in einer ungeteilten Elektrolysezelle mit einer BDD-Anode und einer Titan-Kathode. Angaben zum Größenverhältnis der eingesetzten Elektroden fehlen.

CN 112624274 A zeigt die elektrochemische Behandlung petrochemischer Abwässer in einer ungeteilten Zelle mit einer BDD-Anode und einer Stahl-Kathode. Angaben zum Größenverhältnis der eingesetzten Elektroden fehlen auch hier.

Die elektrochemischen Verfahren zur Abwasserbehandlung unter Verwendung standardisierter ungeteilter Zellen mit Elektroden gleicher Größe sind auf niedrige Stromdichten und dadurch verhältnismäßig einfach abzubauende Substanzen limitiert. Zudem ist die Abbaueffizienz eingeschränkt und erfordert längere Elektrolysezeiträume von bis zu 20 Stunden. Oxidationsstabilere Komponenten können nur mit vermehrtem Aufwand aus Abwässern entfernt werden. Gesamtheitlich sind die bekannten Verfahren somit nur auf einzelne Abwasserströme mit primär leicht abbaubaren organischen Verunreinigungen anwendbar. Im industriellen Kontext treten jedoch häufig stark unterschiedliche Abwässer oder komplexe Gemische auf, für welche weitreichende Variationen der bekannten Methoden notwendig sind.

Es ist somit die Aufgabe der vorliegenden Erfindung, ein Verfahren zur flexiblen und effizienten Entfernung auch schwer elektrochemisch abbaubarer organischer Verunreinigungen aus Prozessabwässern bereitzustellen, das auch unterschiedliche Abwässer und/oder komplexe Reaktionsgemische abbauen kann und großtechnisch einsetzbar ist. Eine weitere Aufgabe der Erfindung ist es, die Behandlungszeit zu minimieren und/oder die Ladungsmenge zu erhöhen. Insbesondere soll ein elektrochemisches Verfahren zur Verfügung gestellt werden, mit dem der CSB- und/oder TOC-Wert ganz besonders gut vermindert werden kann. Der CSB-Wert ist dabei definiert als die Menge an Sauerstoff (in mg/I), die benötigt würde, um alle im Wasser enthaltenen organischen Verbindungen, einschließlich der schwer abbaubaren, (z.B. Pflanzenschutzmittel) und einige anorganische Stoffe durch chemische Oxidation abzubauen. Unter dem TOC-Gehalt (total organic carbon-Gehalt) die Konzentration des gesamten organisch gebundenen Kohlenstoffs im Wasser zu verstehen.

Die sich vorliegend stellenden Aufgaben werden gelöst durch das erfindungsgemäße Verfahren zur Behandlung von chemischem Prozessabwasser in einer mindestens eine BDD-Anode und mindestens eine Platin-, Graphit-, Edelstahl-, DSA-, Titan- oder BDD-Kathode aufweisenden elektrochemischen Zelle, bei der die elektrochemische Zelle eine quasi-geteilte Zelle ist.

Bei dem vorliegenden Verfahren handelt es sich um ein Verfahren zur Behandlung von chemischem Prozessabwasser. Chemische Prozessabwässer enthalten oft oxidierbare organische oder anorganische Komponenten, die zur Verhinderung von Gewässerschäden vor Entsorgung des Abwassers zu entfernen sind. Hierbei handelt es sich insbesondere um funktionalisierte gesättigte, ungesättigte, sowie aromatische Kohlenwasserstoffe. Besonders gut geeignet ist das erfindungsgemäße Verfahren zur Entfernung oxidationsstabiler organischer Verunreinigungen und kationischer organischer Verunreinigungen. Besonders gut geeignet ist das erfindungsgemäße Verfahren zur Behandlung chemischer Prozessabwässer, die mindestens eine Verunreinigung ausgewählt aus Aminen, Ammonium-haltigen Verbindungen, Nitrilen, Alkoholen, Ketonen, Carbonsäuren, Aromaten, Blausäure und Cyaniden enthalten. Ganz besonders gut geeignet ist das erfindungsgemäße Verfahren zur Behandlung chemischer Prozessabwässer, die wasserbasiert mit organischen Komponenten verunreinigt sind und anorganische Salze enthalten (z.B. Sulfate, Phosphate, Sulfide, Bromide). Bevorzugt liegt der Wasseranteil bei über 80 Gew.-%. Weiter bevorzugt reicht der Gehalt der organischen Verunreinigungen von 10 ppm bis zu 100.000 ppm.

Das erfindungsgemäße Verfahren findet in einer elektrochemischen Zelle statt. Elektrochemische Zellen sind dem Fachmann prinzipiell bekannt. Bevorzugt handelt es sich bei der elektrochemischen Zelle um eine Batch- oder Flowzelle.

Die elektrochemische Zelle weist mindestens eine Anode aus Bor-dotiertem Diamant (BDD) auf. Dem Fachmann ist dies Material prinzipiell bekannt. Eine sogenannte BDD-Elektrode besteht aus einem geeignetem Trägermaterial (bevorzugt Niob, Silcium, Titan), welches mit Bor-dotiertem Diamant beschichtet wird. Bevorzugt ist die BDD-Elektrode als Plattenelektrode ausgeführt.

Die elektrochemische Zelle weist als Kathode mindestens eine Platin-, Graphit-, Edelstahl-, DSA-, Titan- oder BDD-Elektrode auf. Diese Elektroden haben den Vorteil einer besonders großen Stabilität ggü. einer Vielzahl von (ggf. sauer oder basisch eingestellten) Abwässern. Bei BDD-Elektroden handelt es sich um Elektroden aus Bor-dotiertem Diamant (BDD). Auch DSA-Elektroden (dimensionsstabile Elektroden) sind dem Fachmann bekannt. Bei ihnen handelt es sich um durch aufeinanderfolgende oder gemischte Abscheidung von Schichten katalytischer Edelmetalloxide aktivierte Elektroden mit geeignetem Trägermaterial. Bevorzugt umfassen die abgeschiedenen Schichten Elemente aus der Gruppe der Platinmetalle, insbesondere Iridium, Ruthenium, Platin, Palladium, Tantal und/oder Rhodium. Der Träger besteht bevorzugt aus Titan oder Niob. Weiter bevorzugt ist die Kathode eine unbeschichtete Elektrode, d.h. eine Platin-, Graphit-, Edelstahl- oder Titan-Elektrode. Noch weiter bevorzugt ist sie eine Platinelektrode.

Die Verwendung einer quasi-geteilten Zelle in Kombination mit einer BDD-Anode steigert die Stromeffizienz signifikant und ermöglicht eine besonders hohe Eliminierung auch oxidationsstabiler organischer Verunreinigungen, insbesondere von HCN und Nebenprodukten aus der Produktion von 3,5,5-Trimethylcyclohexanon (Isophoron), 3-Cyano-3,5,5-trimethylcyclohexanon (Isophoronnitril), 3-Aminomethyl-3,5,5-trimethylcyclohexylamin (Isophorondiamin), 2,2,4- und 2,4,4-Trimethyladipinsäure, 2,2,4- und 2,4,4-Trimethylhexandinitril, und 2,2,4 und 2,4,4-Trimethylhexan-1,6-diamin.

Die elektrochemische Zelle ist eine quasi-geteilte Zelle. Quasi-geteilte Zellen sind im Stand der Technik bekannt. Das Prinzip, das diesem Zelltyp zugrunde liegt, besteht darin, dass die Arbeitselektrode/Anode eine deutlich größere Oberfläche aufweist als die entsprechende Gegenelektrode/Kathode. Resultierend aus dem Unterschied der Elektrooberfläche werden Gegenreaktionen eingeschränkt. Unter "deutlich größer" ist dabei ein Quotient aus Anodenoberfläche zu Kathodenoberfläche von mindestens 2:1 zu verstehen. Bevorzugt beträgt der Quotient aus Anodenoberfläche zu Kathodenoberfläche 2:1 bis 100.000:1, bevorzugt 15:1 bis 80.000:1, weiter bevorzugt 1.000:1 bis 50.000:1.

Weiter bevorzugt werden Plattenelektroden oder in kleinerem Maßstab Stabelektroden eingesetzt.

Die Stromdichtendifferenz liegt bevorzugt zwischen 5 und 100.000 A/m², weiter bevorzugt zwischen 1000 und 50.000 A/m², noch weiter bevorzugt zwischen 5.000 und 35.000 A/m².

Das erfindungsgemäße Verfahren hat den großen Vorteil, dass es ohne weiteren Zusatz von Additiven direkt mit den Prozessabwässern durchgeführt werden kann. Bevorzugt weisen diese Abwässer durch Anwesenheit gelöster ionischer Verbindungen bereits eine ausreichende Leitfähigkeit auf. Weiter bevorzugt sind die Abwässer frei von Schwebstoffen und Partikeln und weisen eine zum Erhalt der Förderfähigkeit geringe Viskosität auf.

Zu Erzielung positiver Eigenschaften, insbesondere zur Erhöhung der Effizienz des Verfahrens, kann jedoch mindestens ein Additiv zugesetzt werden. Bevorzugt wird mindestens ein Additiv ausgewählt aus der Gruppe bestehend aus anorganischen Säuren und Alkalisalzen ausgewählt. Weiter bevorzugt wird ein Additiv ausgewählt aus der Gruppe bestehend aus anorganischen Säuren und ihren Alkalisalzen ausgewählt. Weiter bevorzugt ist das Additiv ausgewählt aus der Gruppe bestehend aus Schwefelsäure, Phosphorsäure, Salzsäure, Bromwasserstoffsäure, ihren Alkalisalzen und Alkalihydroxiden. Noch weiter bevorzugt wird das Additiv ausgewählt aus der Gruppe bestehend aus Schwefelsäure und den Sulfaten von Natrium, Kalium und Lithium.

Bevorzugt beträgt die Konzentration an zugesetztem Additiv 0,002 bis 0,02 mol/l.

### Beispiele

### 1. Effizienzsteigerung durch Änderung der Elektrodenoberflächendifferenz

### Versuchsaufbau

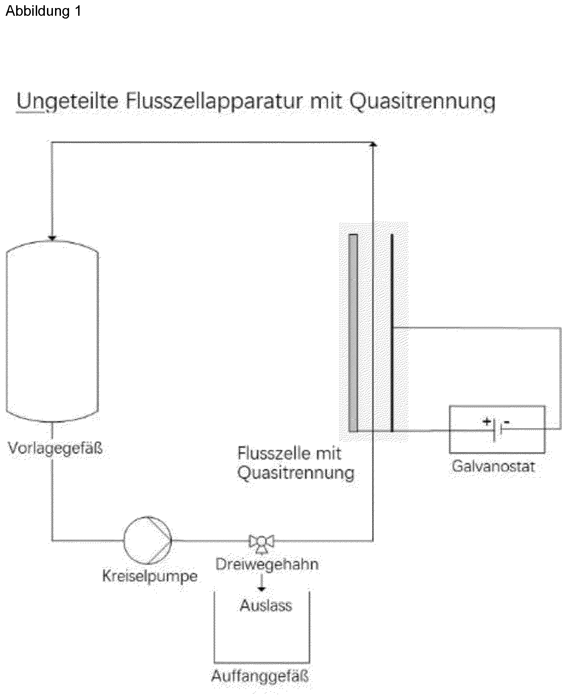

Der Versuchsaufbau besteht in allen unten aufgeführten erfindungsgemäßen Versuchen aus einem Vorlagegefäß, einer Kreiselpumpe und einer Flusszelle mit Quasitrennung. Die Kathode (in Abbildung 1 als schwarzer Strich dargestellt) ist entweder ein Platindraht oder eine Plattenelektrode, welche mit einer Blende abgeschirmt wird. Die Anode ist stets eine BDD-Elektrode.

In den Beispielen a - c wird aus einem Phasentransferprozess stammendes Tetraalkylammoniumhaltiges Abwasser und in den Beispielen d - e Dinitril-haltiges Abwasser aus der Herstellung von 2,2,4- und 2,4,4-Trimethylhexandinitril behandelt.

### a) Nicht quasi-getrennte Zelle, Flächenquotient 1:1, Tetraalkylammonium-Verunreinigung aus Phasentransferkatalyse

Die Oberfläche der eingesetzten Platin-Kathode und der BDD-Anode betrug 80 cm². Der Oberflächenquotient der eingesetzten Elektroden betrug somit 1. Die Ausgangskonzentration der Tetraalkylammonium-Verbindungen betrug 6.400 ppm und die Mischung wurde über 6 h mit einer Stromstärke von 2 A behandelt. Nach der Behandlung betrug der Tetraalkylammonium-Restgehalt 3.600 ppm.

### b) Quasi-geteilte Zelle, Flächenquotient 131:1, Tetraalkylammonium-Verunreinigung aus Phasentransferkatalyse

Die eingesetzte Platin-Kathodenfläche betrug 6 cm² und die BDD-Anode wies eine Oberfläche von 80 cm² auf. Der Oberflächenquotient der eingesetzten Elektroden betrug 13. Die Ausgangskonzentration der Tetraalkylammonium-Verbindungen betrug 6.400 ppm und die Mischung wurde über 6 h mit einer Stromstärke von 5 A behandelt. Nach der Behandlung betrug der Tetraalkylammonium-Restgehalt 40 ppm.

### c) Quasi-geteilte Zelle, Flächenquotient 2.666:1, Tetraalkylammonium-Verunreinigung aus Phasentransferkatalyse

Die eingesetzte Platin-Kathodenfläche betrug 3 mm² und die BDD-Anode wies eine Oberfläche von 80 cm² auf. Der Oberflächenquotient der eingesetzten Elektroden betrug 2.666. Die Ausgangskonzentration der Tetraalkylammonium-Verbindungen betrug 5.400 ppm und die Mischung wurde über 6 h mit einer Stromstärke von 5 A behandelt. Nach der Behandlung betrug der Tetraalkylammonium-Restgehalt 4 ppm.

### d) Nicht Quasi-geteilte Zelle, Flächenquotient 1:1, 2,2,4-/2,4,4-Trimethylhexadinitril-Nebenprodukte

Die eingesetzte Platin-Kathodenfläche betrug 80 cm² und die BDD-Anode wies eine Oberfläche von 80 cm² auf. Der Oberflächenquotient der eingesetzten Elektroden betrug 1. Die CSB zu Beginn des Experimentes betrug 14.600 mg/l und der TOC betrug 5.205 mg/l. Die Mischung wurde über 2 h mit einer Stromstärke von 3 A behandelt. Durch die Behandlung wurde der CSB um 14% und der TOC um 11% reduziert.

### e) Quasi-geteilte Zelle, Flächenquotient 53:1, 2,2,4-/2,4,4-Trimethylhexadinitril-Nebenprodukte

Die eingesetzte Platin-Kathodenfläche betrug 1.5 cm² und die BDD-Anode wies eine Oberfläche von 80 cm² auf. Der Oberflächenquotient der eingesetzten Elektroden betrug 53. Die CSB zu Beginn des Experimentes betrug 14.600 mg/l und der TOC betrug 5.205 mg/l. Die Mischung wurde über 2 h mit einer Stromstärke von 3 A behandelt. Durch die Behandlung wurde der CSB um 25% und der TOC um 20% reduziert.

### 2. Effizienzsteigerung durch Additivzugabe

Auch in Versuch 2a wurde als Ausgangsmaterial Dinitril-haltiges Abwasser aus der Herstellung von 2,2,4- und 2,4,4-Trimethylhexandinitril mit ca. 15.000 mg/l CSB und 5.000 mg/l TOC eingesetzt.

### a) Zugabe von Additiv

Zu 1 I Dinitril-haltigem Abwasser aus der Herstellung von 2,2,4- und 2,4,4-Trimethylhexandinitril wurden 6 ml konzentrierter Schwefelsäure gegeben. Zur elektrochemischen Behandlung wurde das Gemisch in das Vorlagegefäß gefüllt und mithilfe einer Pumpe zyklisch durch die elektrochemische Zelle gepumpt. Die Behandlungszeit betrug jeweils 4,5 h, die Größe der BDD-Anode 80 cm² und die Größe der Platin-Kathode 1.5 cm². Die angelegte Stromstärke belief sich auf 3 A. Es wurde eine Reduktion des CSBs von 97% und des TOCs von 79% erzielt.

## Patentansprüche

1. Verfahren zur Behandlung von chemischem Prozessabwasser in einer
- mindestens eine BDD-Anode und
- mindestens eine Platin-, Graphit-, Edelstahl-, DSA-, Titan- oder BDD-Kathode aufweisenden elektrochemischen Zelle
**dadurch gekennzeichnet, dass**
- die elektrochemische Zelle eine quasi-geteilte Zelle ist.

2. Verfahren nach Anspruch 1,
**dadurch gekennzeichnet, dass**
das chemische Prozessabwasser mindestens eine Verunreinigung ausgewählt aus Aminen, Ammonium-haltigen Verbindungen, Nitrilen, Alkoholen, Ketonen, Carbonsäuren, Aromaten, Blausäure und Cyaniden enthält.

3. Verfahren nach Anspruch 2,
**dadurch gekennzeichnet, dass**
die Verunreinigung ausgewählt ist aus HCN und Nebenprodukten aus der Produktion von 3,5,5-Trimethylcyclohexanon, 3-Cyano-3,5,5-trimethylcyclohexanon, 3-Aminomethyl-3,5,5-trimethylcyclohexylamin, 2,2,4- und 2,4,4-Trimethyladipinsäure, 2,2,4- und 2,4,4-Trimethylhexandinitril, und 2,2,4- und 2,4,4-Trimethylhexan-1,6-diamin.

4. Verfahren nach einem der vorhergehenden Ansprüche
**dadurch gekennzeichnet, dass**
die elektrochemische Zelle eine Batch- oder Flowzelle ist.

5. Verfahren nach einem der vorhergehenden Ansprüche,
**dadurch gekennzeichnet, dass**
die Kathode eine Platin-, Graphit-, Edelstahl- oder Titan-Elektrode ist.

6. Verfahren nach einem der vorhergehenden Ansprüche,
**dadurch gekennzeichnet, dass**
Quotient aus Anodenoberfläche zu Kathodenoberfläche 2:1 bis 100.000:1 beträgt.

7. Verfahren nach einem der vorhergehenden Ansprüche,
**dadurch gekennzeichnet, dass**
die Stromdichtendifferenz zwischen 5 und 100.000 A/m² liegt.

8. Verfahren nach einem der vorhergehenden Ansprüche,
**dadurch gekennzeichnet, dass**
das Abwasser mindestens ein Additiv ausgewählt aus der Gruppe bestehend Schwefelsäure, Phosphorsäure, Salzsäure, Bromwasserstoffsäure, ihren Alkalisalzen und Alkalihydroxiden aufweist.

9. Verfahren nach Anspruch 8,
**dadurch gekennzeichnet, dass**
die Konzentration an Additiv im Abwasser 0,002 bis 0,02 mol/l beträgt.
